# EUROPEAN PATENT APPLICATION

(11) **EP 4 331 893 A1**
(43) Date of publication of application: **06.03.2024**
(21) Application number: 23176434.1
(22) Date of filing: 31.05.2023
(51) Int. Cl.: B60L 8/00, B60L 53/51, B60L 53/52, B60L 53/60, B60L 55/00, B60L 58/12, H02J 7/35, H02J 3/38

(54) **COMPUTING DEVICE, VEHICLE, MANAGEMENT SERVER, AND COMPUTING METHOD**

(30) Priority: 28.07.2022 JP 2022120369
(71) Applicant: TOYOTA JIDOSHA KABUSHIKI KAISHA, Aichi-ken 471-8571 (JP)
(72) Inventor: TAKAHASHI, Tomoya, Toyota-shi 471-8571 (JP); EHARA, Masato, Toyota-shi 471-8571 (JP)
(74) Representative: D Young & Co LLP

(57) **Abstract**

A computing device (500) for a battery (130) mounted on a vehicle (50) is provided. The battery (130) stores electric power including first power obtained from renewable energy and second power different from the first power. The computing device (500) includes a memory (252) and a controller (251) that controls the memory (252). The memory (252) stores accumulated information (170) including an index value of electric energy of the first power stored in the battery (130). When the battery (130) is charged by a power device (40) provided outside the vehicle (50), the computing device (500) updates the accumulated information (170) based on first information (171) related to the first power used for charging. When the electric power in the battery (130) is discharged to the power device (40), the computing device (500) updates the accumulated information (170) based on second information (172) related to the first power used for discharging.

## Description

### BACKGROUND OF THE INVENTION

### 1. Field of the Invention

The present disclosure relates to a computing device, a vehicle, a management server, and a computing method.

### 2. Description of Related Art

For example, Japanese Unexamined Patent Application Publication No. 2020-156149 (JP 2020-156149 A) discloses such a matter that electric power is supplied to a vehicle in a so-called virtual power plant (VPP). This electric power includes so-called green power and normal power. The green power is electric power generated by renewable energy (such as solar power). The normal power is electric power generated by non-renewable energy (such as thermal power).

### SUMMARY OF THE INVENTION

The green power is hereinafter also referred to as "first power", and the normal power is hereinafter also referred to as "second power". In general, it is preferable to use the green power (first power) rather than the normal power (second power) from the viewpoint of environmental protection. Therefore, it is conceivable to add a higher value to the green power than to the normal power. For example, it is conceivable to set a green power unit price higher than a normal power unit price as selling prices of electric power. In JP 2020-156149 A, however, electric energy of the first power that charges the vehicle is not considered.

The present disclosure provides a technology capable of identifying an index value of the electric energy of the first power stored in the vehicle.

A computing device according to a first aspect of the present disclosure is a device for a battery mounted on a vehicle. The battery is configured to store electric power including first power obtained from renewable energy and second power different from the first power. The computing device includes a memory and a controller. The memory is configured to store accumulated information including an index value of electric energy of the first power stored in the battery. The controller is configured to control the memory. The controller is configured to, when the battery is charged by a power device provided outside the vehicle, update the accumulated information based on first information related to the first power used for charging. The controller is configured to, when the electric power in the battery is discharged to the power device, update the accumulated information based on second information related to the first power used for discharging.

According to such a configuration, the computing device stores the accumulated information including the index value of the electric energy of the first power obtained from the renewable energy. The computing device updates the accumulated information when the battery is charged or when the battery is discharged. Therefore, the computing device can identify the index value of the electric energy of the first power in the accumulated electric energy.

The computing device may be configured to acquire the first information generated based on specification by a user. The controller may be configured to update the accumulated information based on the acquired first information.

According to such a configuration, the computing device can update the accumulated information based on the first information reflecting the user's specification.

The computing device may be configured to acquire the second information generated based on specification by a user. The controller may be configured to update the accumulated information based on the acquired second information.

According to such a configuration, the computing device can update the accumulated information based on the second information reflecting the user's specification.

The memory may be configured to store third information to be used to calculate the first power consumed from a start of drive of the vehicle to a stop of the drive of the vehicle. The controller may be configured to update the accumulated information based on the third information when the drive of the vehicle is stopped.

According to such a configuration, the computing device can update the accumulated information based on energy consumption from the start of the drive of the vehicle to the stop of the drive of the vehicle.

The third information may include a ratio of the consumed first power to power consumption from the start of the drive of the vehicle to the stop of the drive of the vehicle. The ratio of the first power in the third information may be specified by a user.

According to such a configuration, the computing device can update the accumulated information based on the third information reflecting the ratio of the first power specified by the user.

The memory may be configured to store fourth information to be used to calculate the first power consumed from a stop of drive of the vehicle to a start of the drive of the vehicle. The controller may be configured to update the accumulated information based on the fourth information when the drive of the vehicle is started.

According to such a configuration, the computing device can update the accumulated information based on energy consumption from the stop of the drive of the vehicle to the start of the drive of the vehicle.

The fourth information may include a ratio of the consumed first power to power consumption from the stop of the drive of the vehicle to the start of the drive of the vehicle. The ratio of the first power in the fourth information may be specified by a user.

According to such a configuration, the computing device can update the accumulated information based on the fourth information reflecting the ratio of the first power specified by the user.

The fourth information may include a ratio of the consumed first power to power consumption from the stop of the drive of the vehicle to the start of the drive of the vehicle. The ratio of the first power in the fourth information may be 0%.

According to such a configuration, the first power consumed from the stop of the drive of the vehicle to the start of the drive of the vehicle can be zero. Therefore, it is possible to prevent a decrease in the first power having a high value. As a result, it is possible to suppress a decrease in the value of the stored electric power.

The computing device may be configured to notify a user of the vehicle about the updated accumulated information.

According to such a configuration, the user of the vehicle can recognize the accumulated information.

A vehicle according to a second aspect of the present disclosure includes the computing device described above.

A management server according to a third aspect of the present disclosure is configured to manage the vehicle. The management server includes the computing device described above. The memory is configured to store the accumulated information of the vehicle for each vehicle identification information of the vehicle.

A computing method according to a fourth aspect of the present disclosure is a method for a battery mounted on a vehicle. The battery is configured to store electric power including first power obtained from renewable energy and second power different from the first power. The computing method includes, when the battery is charged by a power device provided outside the vehicle, updating accumulated information including an index value of electric energy of the first power stored in the battery. The computing method includes, when the electric power in the battery is discharged to the power device, updating the accumulated information based on second information related to the first power used for discharging.

According to the present disclosure, it is possible to identify the index value of the electric energy of the first power stored in the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing an exemplary configuration of a management system 300 according to an embodiment;
FIG. 2 is a diagram showing a configuration of a vehicle 50;
FIG. 3 is a diagram schematically showing a vehicle database (DB) 211;
FIG. 4 is a functional block diagram of a computing device 500;
FIG. 5 is a diagram illustrating a process of an update unit 504 when a first condition is satisfied;
FIG. 6 is a diagram illustrating a process of the update unit 504 when a second condition is satisfied;
FIG. 7 is a diagram illustrating a process of the update unit 504 when a third condition is satisfied;
FIG. 8 is a diagram illustrating a process of the update unit 504 when a fourth condition is satisfied;
FIG. 9 shows an example of a power screen to be displayed on a display 162;
FIG. 10 is a flowchart showing a flow of main charging processes of a vehicle 50, a management server 2, and electric vehicle supply equipment (EVSE) 40;
FIG. 11 is a flowchart showing a flow of main discharging processes of the vehicle 50, the management server 2, and the EVSE 40;
FIG. 12 is a flowchart showing main processes of the vehicle 50 and the management server 2;
FIG. 13 is a diagram illustrating an example of an input screen; and
FIG. 14 is a diagram illustrating an example of an input screen.

### DETAILED DESCRIPTION OF EMBODIMENTS

Hereinafter, an embodiment of the present disclosure will be described in detail with reference to the drawings. The same or corresponding portions are denoted by the same signs throughout the drawings, and description thereof will not be repeated.

### Overall Configuration of Management System

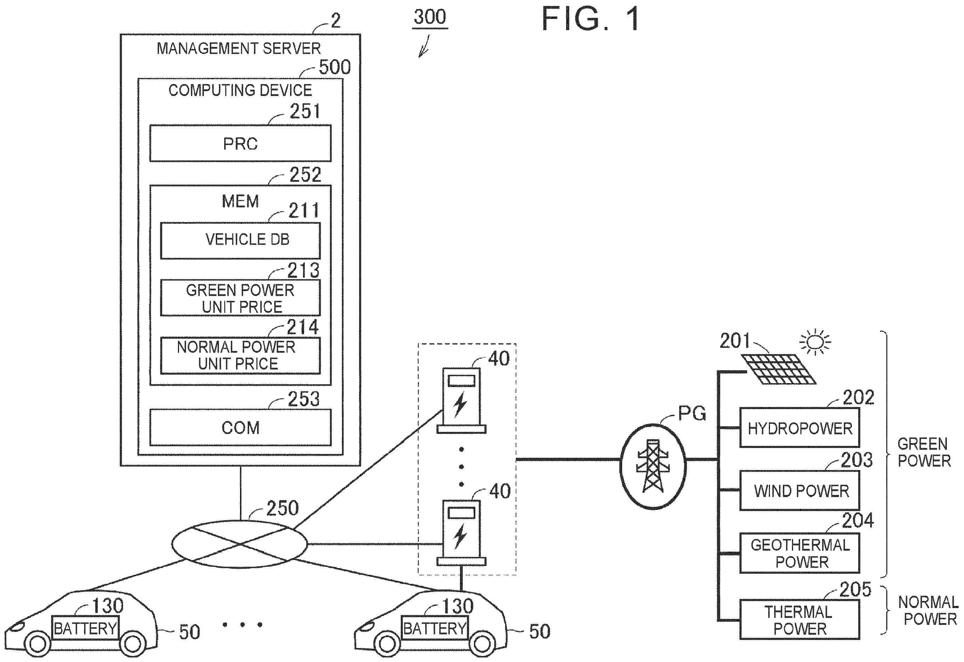

FIG. 1 is a diagram showing an exemplary configuration of a management system 300 according to the present embodiment. Referring to FIG. 1, the management system 300 includes a management server 2, a plurality of vehicles 50, and a plurality of pieces of electric vehicle supply equipment (EVSE) 40. The EVSE 40 corresponds to a "power device" of the present disclosure.

The vehicle 50 is an electrified vehicle, and more specifically, a battery electric vehicle (BEV) or a plug-in hybrid electric vehicle (PHEV). It is assumed that the vehicle 50 of the present embodiment is a BEV. The vehicle 50 includes a battery 130.

The EVSE 40 charges the battery 130 of the vehicle 50. This charging is also referred to as "external charging". The vehicle 50 discharges electric power to the EVSE 40. This discharging is also referred to as "external discharging".

Electric power that charges the vehicle 50 from the EVSE 40 is supplied from a power grid PG. The electric power supplied to the power grid PG includes green power and normal power. The green power is electric power generated by renewable energy. Examples of the renewable energy include solar power, wind power, biomass, hydropower, and geothermal power. In the example of FIG. 1, the green power is generated by solar power 201, hydropower 202, wind power 203, and geothermal power 204.

The normal power is electric power different from the green power. The normal power is electric power generated by non-renewable energy. Examples of the non-renewable energy include coal, gas, and oil. In the example of FIG. 1, the normal power is generated by thermal power 205. The "green power" corresponds to "first power" of the present disclosure. The "normal power" corresponds to "second power" of the present disclosure. The green power and the normal power are collectively referred to as "total power".

The management server 2 manages the management system 300. The management server 2 includes a computing device 500. The computing device 500 includes a control device 251, a storage device 252, and a communication device 253. The control device 251 includes a processor and performs predetermined arithmetic processing. In FIG. 1, the "processor" is represented by "PRC". The "processor" corresponds to a "controller" of the present disclosure. The communication device 253 includes a communication interface and communicates with external devices (vehicle 50 and EVSE 40). In FIG. 1, the "communication interface" is represented by "COM".

The storage device 252 includes a memory that stores programs to be executed by the control device 251. The storage device 252 stores various types of information (maps, relational expressions, parameters, etc.) to be used in the programs. In FIG. 1, the "memory" is represented by "MEM".

The storage device 252 further stores a vehicle database (DB) 211, a green power unit price 213, and a normal power unit price 214. The vehicle DB 211 will be described later. The green power unit price 213 is information indicating a unit price of the green power. The green power unit price 213 indicates, for example, a purchase price and a selling price of a unit amount (for example, 1 kWh) of the green power. The normal power unit price 214 is information indicating a unit price of the normal power. The normal power unit price 214 indicates, for example, a purchase price and a selling price of a unit amount (for example, 1 kWh) of the normal power. The management server 2 may change the green power unit price 213 and the normal power unit price 214 depending on a production amount of the green power and a production amount of the normal power.

The management system 300 may be applied to, for example, a virtual power plant (VPP). In this case, the management server 2 serves as a so-called aggregator server.

### Configuration of Vehicle

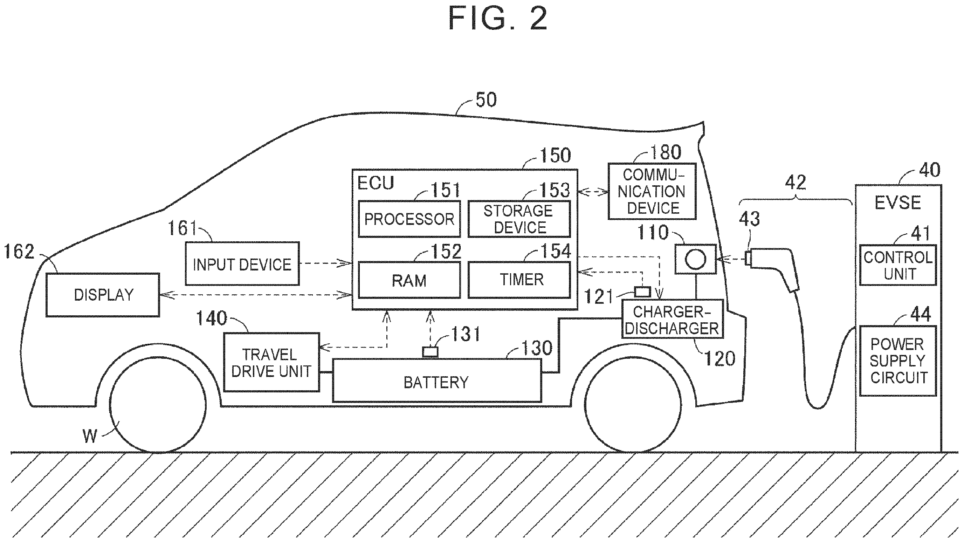

FIG. 2 is a diagram illustrating a configuration of the vehicle 50. Referring to FIG. 2, the vehicle 50 includes the battery 130 that stores electric power for traveling as described above. The vehicle 50 travels by using the electric power stored in the battery 130.

The battery 130 includes a secondary battery such as a lithium ion battery or a nickel metal hydride battery. In the present embodiment, an assembled battery including a plurality of lithium ion batteries is used as the secondary battery.

The vehicle 50 includes an electronic control unit (ECU) 150. The ECU 150 executes, for example, charging control and discharging control on the battery 130. The ECU 150 communicates with devices (management server 2) outside the vehicle 50.

The vehicle 50 further includes a monitoring module 131. The monitoring module 131 estimates a value on the remaining electric energy of the battery 130. This value may be the remaining electric energy itself or a state of charge (SOC) of the battery 130. In the present embodiment, the value on the remaining electric energy is the remaining electric energy itself.

The EVSE 40 includes a control unit 41, a power supply circuit 44, and a charging cable 42. The control unit 41 and the power supply circuit 44 are built in a body of the EVSE 40. The charging cable 42 is connected to the body of the EVSE 40. The charging cable 42 may always be connected to the body of the EVSE 40, or may be detachable from the body of the EVSE 40. The charging cable 42 includes a connector 43 at the tip thereof and includes a power line inside. The control unit 41 controls the power supply circuit 44. The EVSE 40 holds an EVSE ID for identifying the EVSE 40.

The vehicle 50 includes an inlet 110 and a charger-discharger 120 for external charging and external discharging. The inlet 110 transmits electric power to and receives electric power from the outside of the vehicle 50. The inlet 110 is configured such that the connector 43 of the charging cable 42 is connectable to the inlet 110. When the connector 43 is connected (plugged in) to the inlet 110 of the vehicle 50, the vehicle 50 is in a chargeable state (state in which the vehicle 50 can receive electric power supply from the EVSE 40) and a dischargeable state (state in which the vehicle 50 can transmit electric power to the EVSE 40).

The charger-discharger 120 is located between the inlet 110 and the battery 130. The charger-discharger 120 includes a relay for switching connection and disconnection of an electric power path from the inlet 110 to the battery 130, and a power conversion circuit (both not shown). The power conversion circuit may include a bidirectional converter. Each of the relay and the power conversion circuit in the charger-discharger 120 is controlled by the ECU 150. The vehicle 50 further includes a monitoring module 121 that monitors the state of the charger-discharger 120. The monitoring module 121 includes various sensors for detecting the state of the charger-discharger 120, and outputs detection results to the ECU 150. In the present embodiment, the monitoring module 121 detects a voltage and a current input to the power conversion circuit and a voltage and a current output from the power conversion circuit.

External charging and external discharging are possible in the vehicle 50 in a chargeable and dischargeable state. In the present embodiment, a user of the vehicle 50 pays an amount of money corresponding to charging power to a power supplier for the external charging of the vehicle 50. By performing the external discharging of the vehicle 50, the user receives an amount of money corresponding to discharged power from a power receiver. The user of the vehicle 50 is a driver or passenger of the vehicle 50.

Electric power for the external charging is supplied, for example, from the EVSE 40 to the inlet 110 through the charging cable 42. The charger-discharger 120 converts the electric power received by the inlet 110 into electric power suitable for charging the battery 130, and outputs the converted electric power to the battery 130. Electric power for the external discharging is supplied from the battery 130 to the charger-discharger 120. The charger-discharger 120 converts the electric power supplied from the battery 130 into electric power suitable for the external discharging, and outputs the converted electric power to the inlet 110. When the external charging or the external discharging is executed, the relay of the charger-discharger 120 is closed (connected). When neither the external charging nor the external discharging is executed, the relay of the charger-discharger 120 is opened (disconnected).

The ECU 150 includes a processor 151, a random access memory (RAM) 152, a storage device 153, and a timer 154. The ECU 150 may be a computer. The processor 151 may be a central processing unit (CPU). The RAM 152 functions as a working memory for temporarily storing data to be processed by the processor 151. The storage device 153 saves stored information. The storage device 153 includes, for example, a read-only memory (ROM) and a rewritable non-volatile memory. The storage device 153 stores, in addition to programs, information to be used in the programs (for example, maps, mathematical expressions, and various parameters). In the present embodiment, as the processor 151 executes the program stored in the storage device 153, various controls in the ECU 150 are executed. However, the various controls in the ECU 150 are not limited to execution by software, and execution by dedicated hardware (electronic circuit) is possible. The number of processors in the ECU 150 can be set as appropriate, and a processor may be prepared for each predetermined control.

The timer 154 notifies the processor 151 about arrival of a set time. At the time set in the timer 154, the timer 154 transmits, to the processor 151, a signal for notifying the processor 151 about the arrival of the set time. In the present embodiment, a timer circuit is adopted as the timer 154. However, the timer 154 may be realized by software instead of hardware (timer circuit). The ECU 150 can acquire a current time by using a real-time clock (RTC) circuit (not shown) built in the ECU 150.

The vehicle 50 further includes a travel drive unit 140, an input device 161, a display 162, a communication device 180, and drive wheels W. The drive system of the vehicle 50 is not limited to the front wheel drive shown in FIG. 2, and may be rear wheel drive or four-wheel drive.

The travel drive unit 140 includes a power control unit (PCU) and a motor generator (MG), and causes the vehicle 50 to travel by using the electric power stored in the battery 130. The PCU includes, for example, an inverter, a converter, and a relay (hereinafter referred to as "system main relay (SMR)"). The PCU is controlled by the ECU 150. The MG is, for example, a three-phase alternating current motor generator. The MG is driven by the PCU and rotates the drive wheels W. The PCU drives the MG by using electric power supplied from the battery 130. Further, the MG generates regenerative power and supplies the generated electric power to the battery 130. The SMR switches connection and disconnection of an electric power path from the battery 130 to the MG. The SMR is closed (connected) when the vehicle 50 is traveling.

The input device 161 receives an input from the user. The input device 161 is operated by the user and outputs a signal corresponding to the operation by the user to the ECU 150. The input device 161 is any one of various switches, various pointing devices, a keyboard, and a touch panel. The input device 161 may include a smart speaker that receives voice input. Drive of the vehicle 50 starts when the user performs a start operation on the input device 161. The drive of the vehicle 50 ends when the user performs an end operation on the input device 161.

When the inlet 110 of the vehicle 50 is connected to the connector 43 of the EVSE 40, the user can select the external charging by the EVSE 40 or the external discharging to the EVSE 40. The input device 161 receives the selection operation from the user.

The display 162 displays various images. The display 162 displays, for example, a navigation screen (for example, a travel route from a current position of the vehicle 50 to a destination).

The communication device 180 includes various communication interfaces (I/Fs). The ECU 150 can communicate with the management server 2 (see FIG. 1) through the communication device 180.

### Vehicle DB

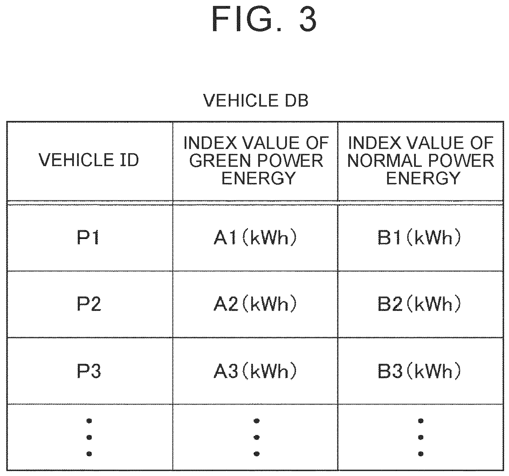

Next, the vehicle DB 211 (see FIG. 1) held by the management server 2 will be described. FIG. 3 is a diagram schematically showing the vehicle DB 211. In the present embodiment, vehicle identification information for identifying each vehicle 50 is assigned to each of all the vehicles 50 in the management system 300 (see FIG. 1). In the example of FIG. 3, a vehicle identification (ID) is shown as an example of the vehicle identification information.

In the example of FIG. 3, an index value of green power energy and an index value of normal power energy are stored in association with the vehicle ID. The "index value of electric energy" is not a value accurately indicating the electric energy but a value indicating an index of the electric energy. In the present embodiment, the "index value of electric energy" is a value indicating the electric energy itself. That is, the "index value of green power energy" is a value indicating the electric energy of the green power itself in the remaining electric energy of the battery 130. The "index value of normal power energy" is a value indicating the electric energy of the normal power itself in the remaining electric energy of the battery 130. In this way, the management server 2 stores the index values of the green power energy and the index values of the normal power energy of all the vehicles 50. The index value of the green power energy and the index value of the normal power energy are also collectively referred to as "accumulated information". The vehicle DB 211 stores the accumulated information for each vehicle ID. As a modification, the accumulated information may include the index value of the green power energy without including the index value of the normal power energy.

Next, the reason why the index value of the green power energy is stored will be described. In general, it is preferable to use the green power rather than the normal power from the viewpoint of environmental protection. Therefore, it is conceivable to add a higher value to the green power than to the normal power. For example, it is conceivable to set the green power unit price 213 higher than the normal power unit price 214 as selling prices of electric power. In this way, the user can sell the green power of unit electric energy at a higher price than that of the normal power of unit electric energy. Therefore, it is possible to promote the use of green power for the user of the vehicle 50. As a result, it is possible to contribute to environmental protection.

In view of the above, in the present embodiment, the computing device 500 of the management server 2 stores the index value of the green power energy for each vehicle. Therefore, the computing device 500 can calculate the selling price of the green power out of the total power of the battery 130 based on the index value of the green power energy. Specifically, the computing device 500 can calculate the total selling price of the green power by multiplying the index value of the green power energy to be sold (discharged) by a unit price (selling price) of the green power.

In the example of FIG. 3, accumulated information associated with a vehicle 50 having a vehicle ID "P1" indicates that the index value of the green power energy is A1 (kWh) and the index value of the normal power energy is B1 (kWh).

### Functional Block Diagram of Computing Device

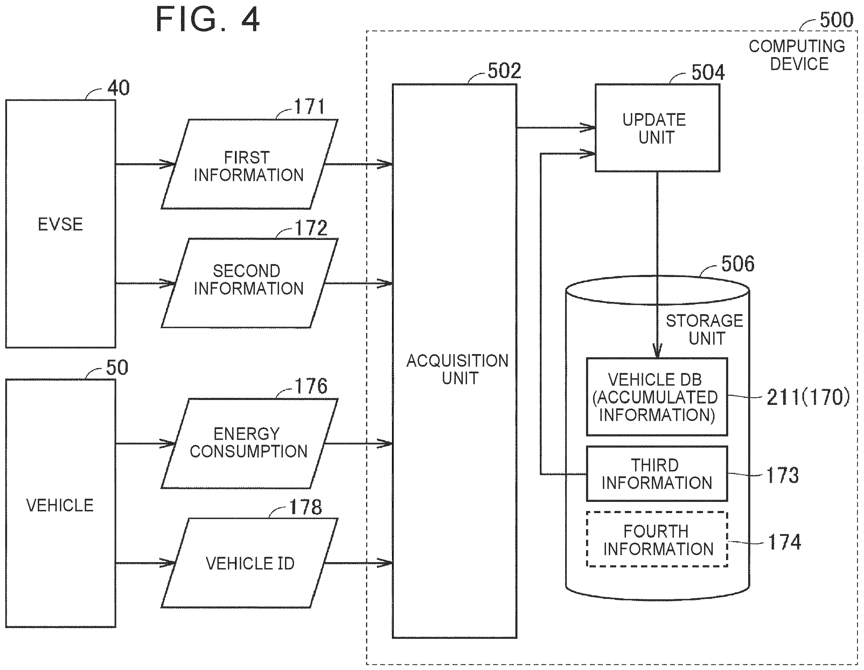

FIG. 4 is a functional block diagram of the computing device 500. In the example of FIG. 4, the computing device 500 includes an acquisition unit 502, an update unit 504, and a storage unit 506. The storage unit 506 stores the vehicle DB 211 (accumulated information 170 for each vehicle ID), and third information 173 described later. Fourth information 174 indicated by a dashed line will be described later.

The acquisition unit 502 acquires various types of information from an external device (EVSE 40 or vehicle 50). The various types of information include first information 171, second information 172, energy consumption 176, and a vehicle ID 178.

The pieces of information acquired by the acquisition unit 502 are output to the update unit 504. Based on the pieces of information, the update unit 504 updates the accumulated information 170 (index value of green power energy and index value of normal power energy) when a predetermined update condition is satisfied. The update condition for the accumulated information includes a first condition, a second condition, a third condition, and a fourth condition.

The first condition is satisfied when the external charging of the vehicle 50 by the EVSE 40 is finished. The second condition is satisfied when the external discharging from the vehicle 50 to the EVSE 40 is finished. The third condition is satisfied when the drive of the vehicle 50 is started. The fourth condition is satisfied when the drive of the vehicle 50 is stopped.

When the first condition is satisfied, the acquisition unit 502 acquires the first information 171 from the EVSE 40. The update unit 504 updates the accumulated information 170 in the storage unit 506 based on the first information 171. The first information 171 will be described. When charging the battery 130 of the vehicle 50, the user inputs (specifies), on the input device 161, desired green power energy and desired normal power energy for the charging. In the present embodiment, it is assumed, for the sake of simplicity, that the battery 130 is charged with electric power at the total energy of the green power energy and the normal power energy specified by the user. In the present embodiment, the first information 171 is information based on the green power energy and the normal power energy specified by the user.

When the second condition is satisfied, the acquisition unit 502 acquires the second information 172 from the EVSE 40. The second information 172 will be described. When discharging electric power in the battery 130 of the vehicle 50 to the EVSE 40, the user inputs (specifies), on the input device 161, desired green power energy and desired normal power energy for the discharging. In the present embodiment, it is assumed, for the sake of simplicity, that electric power at the total energy of the green power energy and the normal power energy specified by the user is discharged to the EVSE 40. In the present embodiment, the second information 172 is information based on the green power energy and the normal power energy specified by the user.

When the third condition or the fourth condition is satisfied, the acquisition unit 502 acquires the energy consumption 176 of the battery 130 of the vehicle 50 from the vehicle 50. The update unit 504 updates the accumulated information 170 based on the energy consumption 176 and the third information 173.

The acquisition unit 502 acquires the vehicle ID 178 from the vehicle 50 at timings associated with the satisfaction of the first to fourth conditions. The update unit 504 updates the accumulated information 170 associated with the vehicle ID 178 in the vehicle DB 210. The acquisition timing of the vehicle ID 178 will be described later.

### Processes of Update Unit

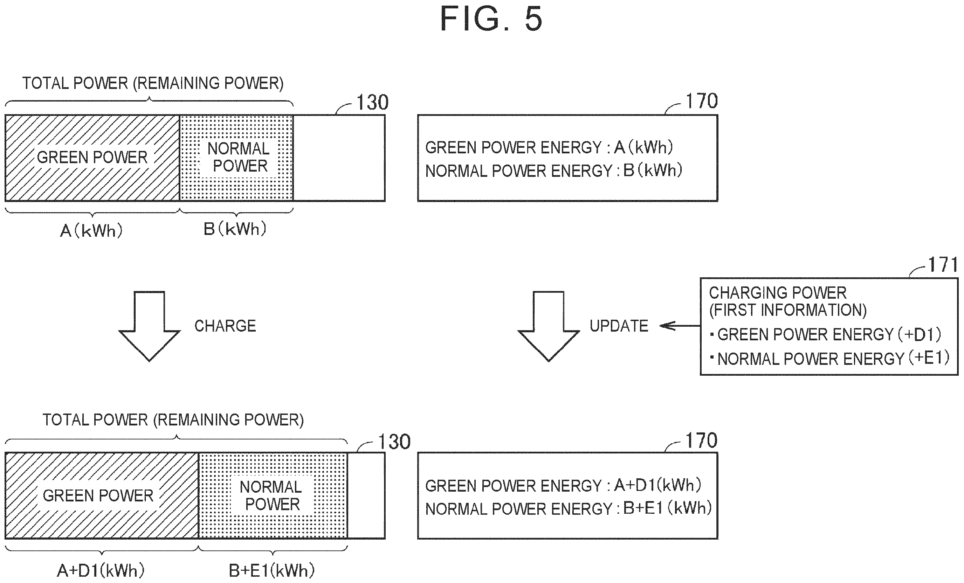

Next, details of processes of the update unit 504 will be described. FIG. 5 is a diagram illustrating a process of the update unit 504 when the external charging is finished (when the first condition is satisfied).

An upper part of FIG. 5 shows the total power (remaining power) of the battery 130 and the accumulated information 170 before the charging. A lower part of FIG. 5 shows the total power (remaining power) of the battery 130 and the updated accumulated information 170 at the end of the charging.

In FIG. 5 and FIGS. 6 to 8 described later, the green power energy and the normal power energy of the battery 130 are the index value of the green power energy and the index value of the normal power energy indicated by the accumulated information 170, respectively.

In the upper part of FIG. 5, the accumulated information 170 indicates that the green power energy is A (kWh) and the normal power energy is B (kWh). The green power energy specified by the user for charging is hereinafter also referred to as "charging green power energy", and the normal power energy specified by the user for charging is hereinafter also referred to as "charging normal power energy".

The first information 171 indicates that the charging green power energy specified by the user is D1 (kWh) and the charging normal power energy specified by the user is E1 (kWh). In such a case, the update unit 504 (see FIG. 4) updates the index value of the green power energy in the accumulated information 170 from "A (kWh)" to "A + D1 (kWh)". The update unit 504 also updates the index value of the normal power energy in the accumulated information 170 from "B (kWh)" to "B + E1 (kWh)".

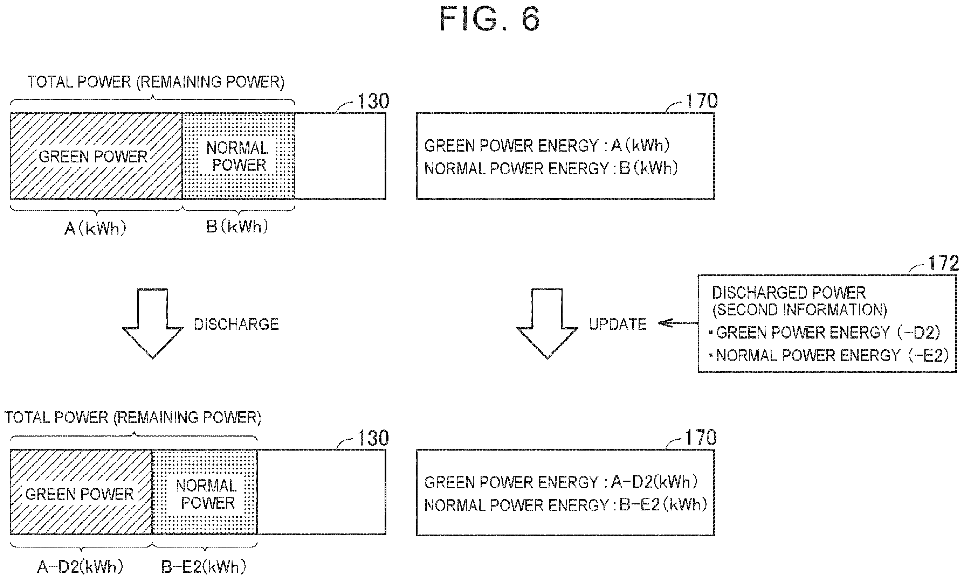

FIG. 6 is a diagram illustrating a process of the update unit 504 when the external discharging is finished (when the second condition is satisfied). An upper part of FIG. 6 shows the total power (remaining power) of the battery 130 and the accumulated information 170 before the discharging. A lower part of FIG. 6 shows the total power (remaining power) of the battery 130 and the accumulated information 170 at the end of the discharging.

In the upper part of FIG. 6, the accumulated information 170 indicates that the green power energy is A (kWh) and the normal power energy is B (kWh). The green power energy specified by the user for discharging is hereinafter also referred to as "discharging green power energy", and the normal power energy specified by the user for discharging is hereinafter also referred to as "discharging normal power energy".

The second information 172 indicates that the discharging green power energy is D2 (kWh) and the discharging normal power energy is E2 (kWh). In such a case, the update unit 504 (see FIG. 4) updates the green power energy in the accumulated information 170 from "A (kWh)" to "A - D2 (kWh)". The update unit 504 also updates the normal power energy in the accumulated information 170 from "B (kWh)" to "B - E2 (kWh)".

According to such a configuration, the computing device 500 stores the accumulated information 170 including the index value of the electric energy of the green power obtained from the renewable energy (see FIG. 3). The computing device 500 updates the accumulated information 170 when the battery 130 is charged or when the battery 130 is discharged (see FIGS. 5 and 6). Therefore, the computing device 500 can identify the index value of the electric energy of the first power in the accumulated electric energy. Thus, the computing device 500 can calculate the total selling price of the green power energy having a higher value than the normal power.

When the battery 130 is charged by the EVSE 40, the computing device 500 acquires the first information 171 (see FIG. 4) and updates the accumulated information 170 based on the acquired first information 171 (see FIG. 5). The first information 171 is information based on the charging green power energy and the charging normal power energy specified by the user. Therefore, the computing device 500 can update the accumulated information 170 based on the first information 171 reflecting the user's specification.

When the electric power in the battery 130 is discharged to the EVSE 40, the computing device 500 acquires the second information 172 (see FIG. 4) and updates the accumulated information 170 based on the acquired second information 172 (see FIG. 6). The second information 172 is information based on the discharging green power energy and the discharging normal power energy specified by the user. Therefore, the computing device 500 can update the accumulated information 170 based on the second information 172 reflecting the user's specification.

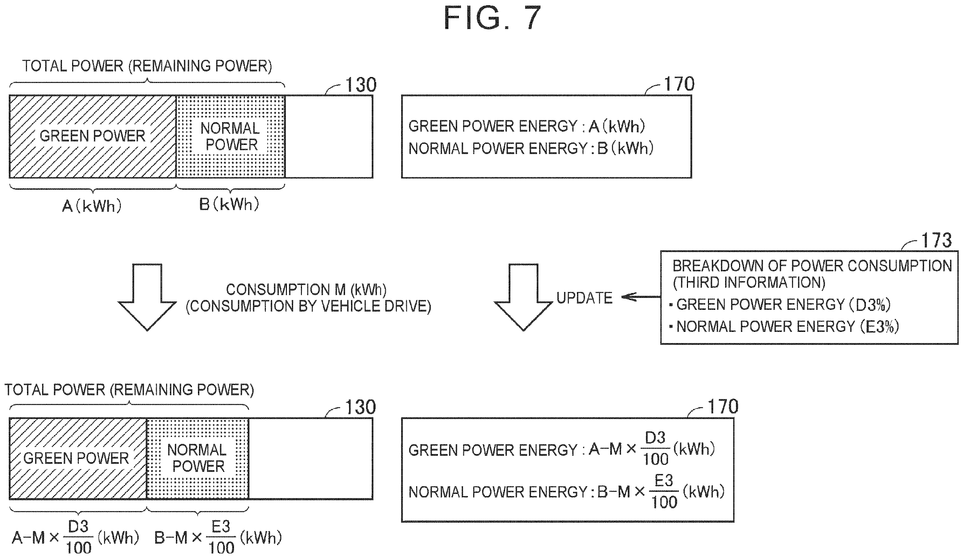

FIG. 7 is a diagram illustrating a process of the update unit 504 when the drive of the vehicle 50 is started (when the third condition is satisfied). An upper part of FIG. 7 shows the total power (remaining power) of the battery 130 and the accumulated information 170 at the start of the drive of the vehicle 50. A lower part of FIG. 7 shows the total power (remaining power) of the battery 130 and the accumulated information 170 at the stop of the drive of the vehicle 50.

In the upper part of FIG. 7, the accumulated information 170 indicates that the green power energy is A (kWh) and the normal power energy is B (kWh). It is assumed that electric power consumed by the traveling of the vehicle 50 from the start of the drive of the vehicle 50 to the stop of the drive of the vehicle 50 is M (kWh). This power consumption is transmitted from the vehicle 50 to the management server 2 when the third condition is satisfied.

In the present embodiment, the vehicle 50 stores the total energies of the vehicle 50 in the RAM 152 when the drive of the vehicle 50 is started and when the drive of the vehicle 50 is stopped. When the drive of the vehicle 50 is stopped, the vehicle 50 calculates the power consumption (M (kWh)) by subtracting the total energy at the stop from the total energy during the drive immediately before the stop.

In the present embodiment, the vehicle 50 updates the accumulated information 170 by using the third information 173. The third information 173 is used to calculate the green power consumed from the start of the drive of the vehicle 50 to the stop of the drive of the vehicle 50. The third information 173 of the present embodiment indicates the breakdown (ratio) of the power consumption. The example of FIG. 7 shows that the ratio of the green power is D3 (%) and the ratio of the normal power is E3 (%). It is noted that D3 + E3 = 100 (%). In the present embodiment, the ratio D3 (%) of the green power and the ratio E3 (%) of the normal power are fixed values.

In such a case, the power consumption is M (kWh). Therefore, the update unit 504 determines, based on the breakdown of the third information 173, that the power consumption of the green power is "M × (D3) / 100" (kWh) and the power consumption of the normal power is "M × (E3) / 100" (kWh).

That is, the update unit 504 updates the green power energy in the accumulated information 170 from "A (kWh)" to "A - {M × (D3) / 100} (kWh)". The update unit 504 also updates the normal power energy in the accumulated information 170 from "B (kWh)" to "B - {M × (E3) / 100} (kWh)". According to such a configuration, the computing device 500 can update the accumulated information based on the energy consumption from the start of the drive of the vehicle 50 to the stop of the drive of the vehicle 50.

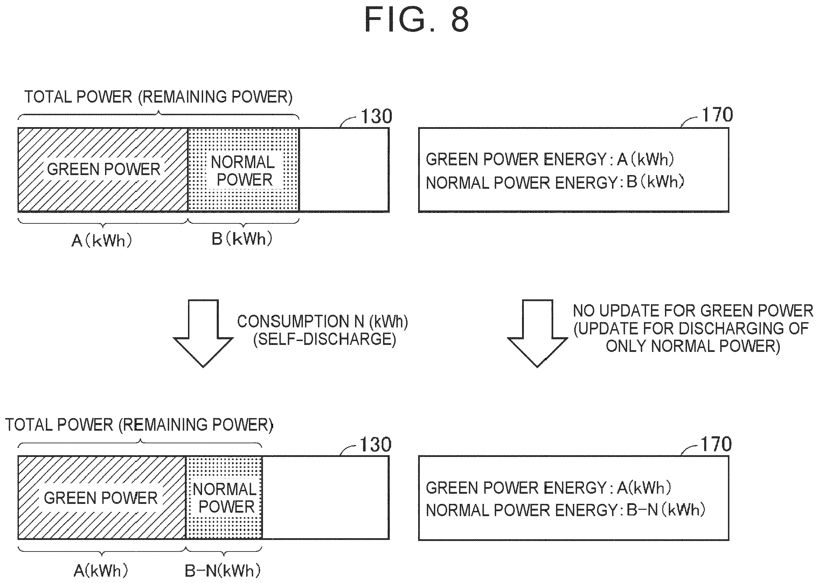

FIG. 8 is a diagram illustrating a process of the update unit 504 when the drive of the vehicle 50 is stopped (when the fourth condition is satisfied). An upper part of FIG. 8 shows the total power (remaining power) of the battery 130 and the accumulated information 170 at the stop of the drive of the vehicle 50. A lower part of FIG. 8 shows the total power (remaining power) of the battery 130 and the accumulated information 170 at the start of the drive of the vehicle 50.

In the upper part of FIG. 8, the accumulated information 170 indicates that the green power energy is A (kWh) and the normal power energy is B (kWh). The battery 130 self-discharges from the stop of the drive of the vehicle 50 to the start of the drive of the vehicle 50. Therefore, the electric power in the battery 130 is consumed. It is assumed that the power consumption caused by the self-discharge is N (kWh). This power consumption is transmitted from the vehicle 50 to the management server 2.

In the present embodiment, when the drive of the vehicle 50 is started, the vehicle 50 calculates the power consumption (N (kWh)) by subtracting the total energy at the start from the total energy at the stop immediately before the start.

Regarding the breakdown (ratio) of the power consumption when the fourth condition is satisfied, the ratio of the green power is 0% and the ratio of the normal power is 100%. That is, in the present embodiment, the computing device 500 determines that only the normal power is consumed and the green power is not consumed as the power consumption caused by the self-discharge of the battery 130. Therefore, the update unit 504 maintains the green power energy in the accumulated information 170 as "A (kWh)". The update unit 504 updates the normal power energy in the accumulated information 170 from "B (kWh)" to "B - N (kWh)". According to such a configuration, the computing device 500 can update the accumulated information based on the energy consumption caused by the self-discharge from the end of the drive of the vehicle 50 to the start of the drive of the vehicle 50. If control is performed to consume the green power due to the self-discharge that occurs regardless of the use of the vehicle 50 by the user, the user may be distrustful. Therefore, in the case of self-discharge, only the normal power is consumed and the green power is not consumed. Thus, such distrust can be reduced.

### Display of Accumulated Information

The computing device 500 may notify the user of the vehicle about the accumulated information 170. For example, the user performs a predetermined operation on the input device 161 so that the ECU 150 of the vehicle transmits a request signal for requesting the accumulated information to the management server 2. The request signal includes an ID of the vehicle including the ECU 150.

The computing device 500 refers to the vehicle DB 211 (see FIG. 3), extracts accumulated information (index value of green power energy and index value of normal power energy) associated with the transmitted vehicle ID, and transmits the accumulated information to the vehicle 50. When the accumulated information is acquired, the vehicle 50 notifies the user about the accumulated information. For example, the vehicle 50 causes the display 162 to display a power screen based on the accumulated information.

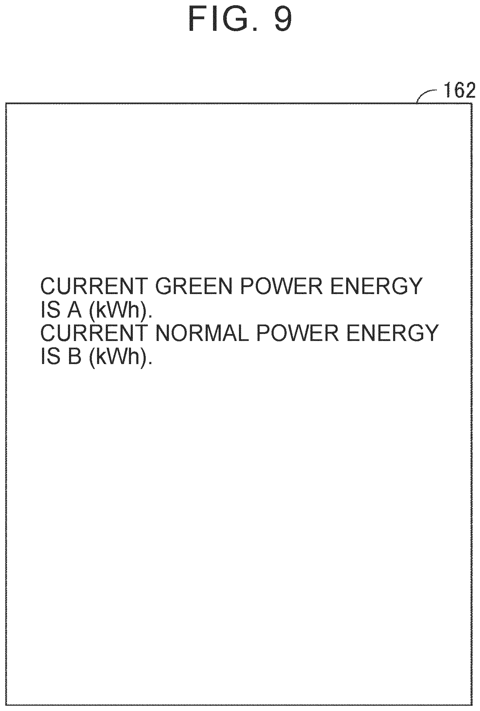

FIG. 9 shows an example of the power screen to be displayed on the display 162. The example of FIG. 9 shows a text image that reads, "Current green power energy is A (kWh). Current normal power energy is B (kWh)." The notification of the accumulated information is not limited to the screen display. The accumulated information may be output by voice. According to such a configuration, the user can recognize the accumulated information (green power energy and normal power energy).

### Flowcharts

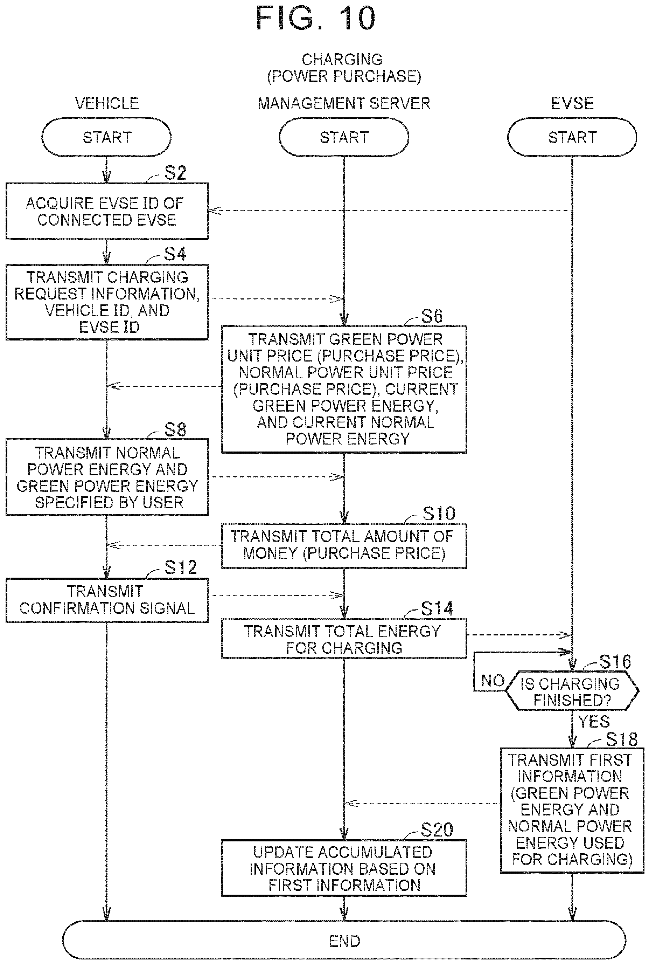

A flow of main processes of the vehicle 50, the management server 2, and the EVSE 40 will be described with reference to FIG. 10. FIG. 10 is a flowchart showing a flow of main processes for charging the battery 130 of the vehicle 50. The processes of FIG. 10 are started under the condition that the charging of the battery 130 is designated by the user and the connector 43 of the EVSE 40 (see FIG. 2) is connected to the inlet 110 of the vehicle 50.

In Step S2, the vehicle 50 acquires an EVSE ID of the connected EVSE 40 from the EVSE 40. In Step S4, the vehicle 50 transmits charging request information, the vehicle ID of the vehicle 50, and the EVSE ID to the management server 2. The charging request information is information for requesting charging of the battery 130 of the vehicle 50. The EVSE ID is the information acquired in Step S2.

In Step S6, the management server 2 transmits a green power unit price (purchase price), a normal power unit price (purchase price), an index value of current green power energy, and an index value of current normal power energy to the vehicle 50. The green power unit price (purchase price) corresponds to the green power unit price 213 shown in FIG. 1, and the normal power unit price (purchase price) corresponds to the normal power unit price 214 shown in FIG. 1. The index value of current green power energy and the index value of current normal power energy are the index value of current green power energy and the index value of current normal power energy included in the accumulated information associated with the vehicle ID in the vehicle DB 211 (see FIG. 3), respectively.

The vehicle 50 causes the display 162 to display the information transmitted in Step S6 (green power unit price (purchase price), normal power unit price (purchase price), index value of current green power energy, and index value of current normal power energy). The user views the displayed information and inputs green power energy and normal power energy desired by the user for charging on the display 162. In Step S8, the vehicle 50 transmits the input (specified by the user) normal power energy and green power energy to the management server 2.

Next, the management server 2 calculates a first value by multiplying the green power energy transmitted in Step S8 by the green power unit price (purchase price). The management server 2 also calculates a second value by multiplying the normal power energy transmitted in Step S8 by the normal power unit price (purchase price). The management server 2 calculates the total amount of money by summing the first value and the second value. In Step S10, the management server 2 transmits the total amount of money to the vehicle 50.

When the total amount of money is received, the vehicle 50 causes the display 162 to display the total amount of money. The user views the total amount of money and performs a confirmation operation on the input device 161 when the user agrees with the total amount of money. The confirmation operation is, for example, an operation on a confirmation button displayed on the display 162. When the user does not agree with the total amount of money and performs an operation to show that the user does not agree, the processes of FIG. 10 are terminated.

When the confirmation operation is performed by the user, the vehicle 50 transmits a confirmation signal to the management server 2 in Step S12. When the confirmation signal is received, the management server 2 calculates the total energy for charging and transmits the total energy to the EVSE 40 in Step S14. The total energy is the total amount of the normal power energy and the green power energy transmitted in Step S8. The total energy is transmitted to the EVSE 40 based on the EVSE ID transmitted from the vehicle 50 in Step S4.

The EVSE 40 can recognize the total energy for charging the vehicle 50 by receiving the total energy from the management server 2. In Step S16, the EVSE 40 waits until the charging with the recognized total energy is finished (NO in Step S16).

When the charging with the recognized total energy is finished in Step S16 (YES in Step S16), the EVSE 40 generates and transmits the first information 171 (see FIG. 4) in Step S18. As described above, the first information 171 indicates the normal power energy and the green power energy themselves specified by the user in Step S8. The first condition is a condition that determination is made as "YES" in Step S16.

In Step S20, the management server 2 updates the accumulated information 170 associated with the vehicle ID in the vehicle DB 211 based on the first information 171. This vehicle ID is the vehicle ID transmitted in Step S4. Through the above operations, the processes of FIG. 10 are terminated.

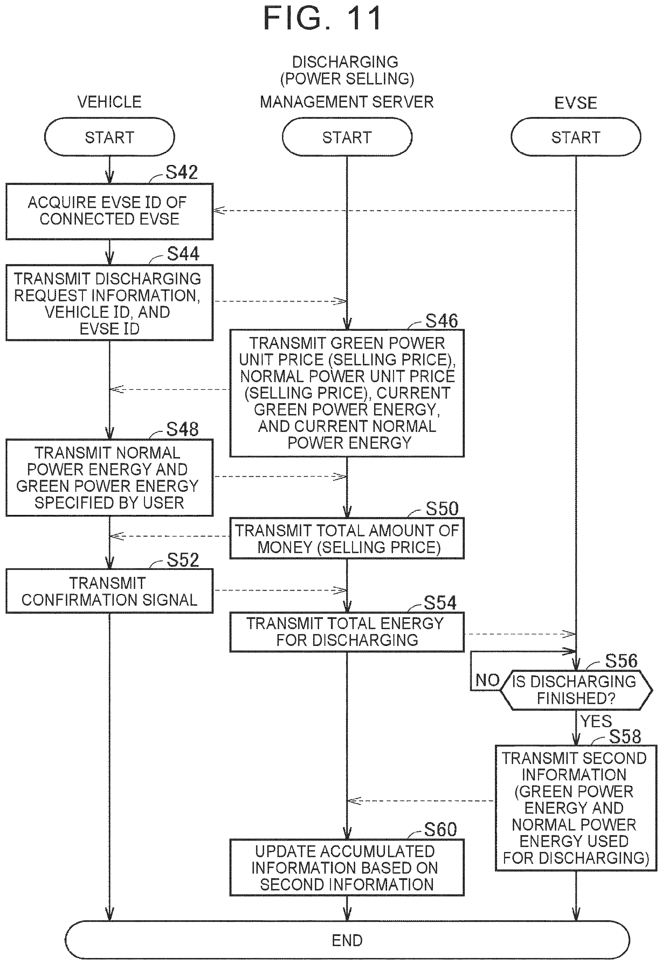

FIG. 11 is a flowchart showing a flow of main processes for discharging the battery 130 of the vehicle 50. In Step S42, the vehicle 50 acquires an EVSE ID of the connected EVSE 40 from the EVSE 40. In Step S44, the vehicle 50 transmits discharging request information, the vehicle ID of the vehicle 50, and the EVSE ID to the management server 2. The discharging request information is information for requesting discharging of the battery 130 of the vehicle 50. The EVSE ID is the information acquired in Step S42.

In Step S46, the management server 2 transmits a green power unit price (selling price), a normal power unit price (selling price), an index value of current green power energy, and an index value of current normal power energy to the vehicle 50. The green power unit price (selling price) corresponds to the green power unit price 213 shown in FIG. 1, and the normal power unit price (selling price) corresponds to the normal power unit price 214 shown in FIG. 1.

The vehicle 50 causes the display 162 to display the information transmitted in Step S46 (green power unit price (selling price), normal power unit price (selling price), index value of current green power energy, and index value of current normal power energy). The user views the displayed information and inputs green power energy and normal power energy desired by the user for discharging on the display 162. The green power energy and the normal power energy that can be input are the index value of current green power energy and the index value of current normal power energy that are transmitted in Step S46. In Step S48, the vehicle 50 transmits the input (specified by the user) normal power energy and green power energy to the management server 2.

Next, the management server 2 calculates a third value by multiplying the green power energy transmitted in Step S48 by the green power unit price (selling price). The management server 2 also calculates a fourth value by multiplying the normal power energy transmitted in Step S48 by the normal power unit price (selling price). The management server 2 calculates the total amount of money by summing the third value and the fourth value. In Step S50, the management server 2 transmits the total amount of money to the vehicle 50.

When the total amount of money is received, the vehicle 50 causes the display 162 to display the total amount of money. The user views the total amount of money and performs a confirmation operation on the input device 161 when the user agrees with the total amount of money. The confirmation operation is, for example, an operation on a confirmation button displayed on the display 162. When the user does not agree with the total amount of money and performs an operation to show that the user does not agree, the processes of FIG. 11 are terminated.

When the confirmation operation is performed by the user, the vehicle 50 transmits a confirmation signal to the management server 2 in Step S52. When the confirmation signal is received, the management server 2 calculates the total energy for discharging and transmits the total energy to the EVSE 40 in Step S54. The total energy is the total amount of the normal power energy and the green power energy transmitted in Step S48. The total energy is transmitted to the EVSE 40 based on the EVSE ID transmitted from the vehicle 50 in Step S44.

The EVSE 40 can recognize the total energy to be discharged from the vehicle 50 by receiving the total energy from the management server 2. In Step S56, the EVSE 40 waits until the discharging of the recognized total energy is finished (NO in Step S56).

When the discharging of the recognized total energy is finished in Step S56 (YES in Step S56), the EVSE 40 generates and transmits the second information 172 (see FIG. 4) in Step S58. As described above, the second information 172 indicates the normal power energy and the green power energy themselves specified by the user in Step S48. The second condition is a condition that determination is made as "YES" in Step S56.

In Step S60, the management server 2 updates the accumulated information 170 associated with the vehicle ID in the vehicle DB 211 based on the second information 172. This vehicle ID is the vehicle ID transmitted in Step S44. Through the above operations, the processes of FIG. 11 are terminated.

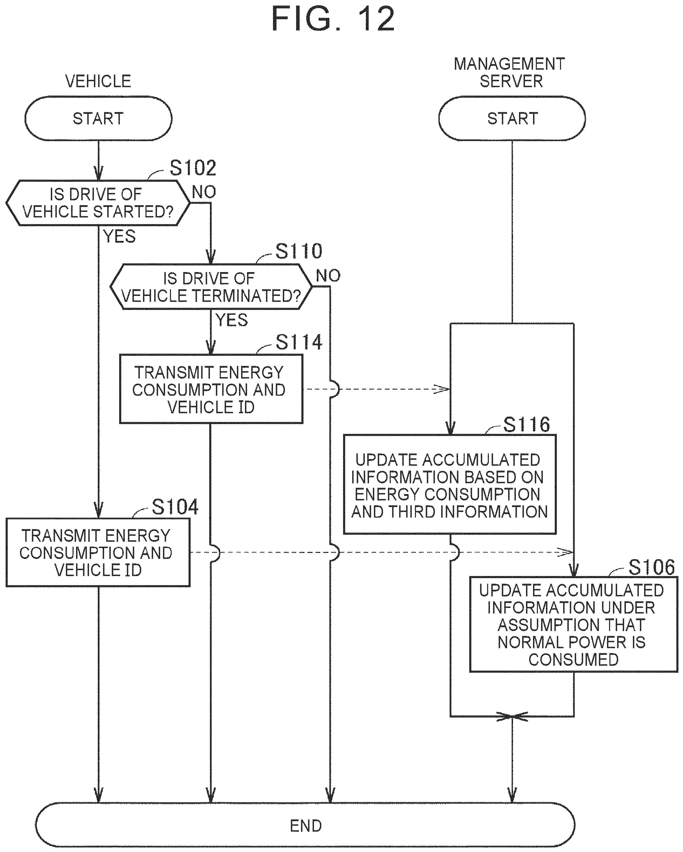

FIG. 12 is a flowchart showing other processes of the vehicle 50 and the management server 2. The processes of FIG. 12 are executed every predetermined period (for example, one second). The processes of FIG. 12 are executed in parallel with the processes of the computing device 500 shown in FIGS. 10 and 11.

In Step S102, the vehicle 50 first determines whether the drive of the vehicle 50 is started. When the vehicle 50 determines that the drive of the vehicle 50 is started (YES in Step S102), the processes proceed to Step S104. When the vehicle 50 determines that the drive of the vehicle 50 is not started (NO in Step S 102), the processes proceed to Step S110.

In Step S104, the vehicle 50 transmits the vehicle ID and energy consumption to the management server 2. The energy consumption is the energy consumption caused by self-discharge described in FIG. 8.

When the vehicle ID and the energy consumption are received, the management server 2 updates the accumulated information 170 associated with the vehicle ID in the vehicle DB 211 based on the energy consumption in Step S106. As described above, the management server 2 updates the accumulated information 170 under the assumption that only the normal power is consumed.

In Step S110, the vehicle 50 determines whether the drive of the vehicle 50 is terminated. When the vehicle 50 determines that the drive of the vehicle 50 is terminated (YES in Step S110), the processes proceed to Step S114. When the vehicle 50 determines that the drive of the vehicle 50 is not terminated (NO in Step S110), the processes of FIG. 12 are terminated.

In Step S114, the vehicle 50 transmits the vehicle ID and energy consumption to the management server 2. The energy consumption is the energy consumption caused by the drive of the vehicle 50 described in FIG. 7.

When the vehicle ID and the energy consumption are received, the management server 2 updates the accumulated information 170 associated with the vehicle ID in the vehicle DB 211 based on the energy consumption in Step S116. As described above, the management server 2 updates the accumulated information 170 based on the energy consumption and the third information 173.

### Others

(1) In the above embodiment, description has been given of the configuration in which the "index value of green power energy" is a value indicating the electric energy of the green power itself, and the "index value of normal power energy" is a value indicating the electric energy of the normal power itself. However, the "index value of green power energy" and the "index value of normal power energy" may be any values as long as they are index values indicating these electric energies.

For example, the "index value of green power energy" may be a "ratio of green power energy to remaining electric energy". The "index value of normal power energy" may be a "ratio of normal power energy to remaining electric energy".

The "index value of green power energy" may be an "SOC of green power energy". The "index value of normal power energy" may be an "SOC of normal power energy".
(2) In the above embodiment, description has been given of the configuration in which the management server 2 includes the computing device 500. However, there may be adopted a configuration in which the vehicle 50 includes the computing device 500. In such a configuration, the vehicle 50 acquires the accumulated information 170 of the vehicle from the management server 2 when any one of the first to fourth conditions is satisfied. The vehicle 50 updates the accumulated information 170 and transmits the updated accumulated information 170 to the management server 2. Even the computing device 500 adopting such a configuration has the same effects as those in the above embodiment.
(3) In FIG. 10, description has been given of the configuration in which the charging with the normal power energy and the green power energy specified by the user (see Step S8) is executed. However, the management server 2 may determine whether the charging with the normal power energy and the green power energy specified by the user is executable. The management server 2 makes this determination based on, for example, normal power energy and green power energy distributed in the management system 300 and the charging statuses of other vehicles 50. For example, when the green power energy is insufficient, the computing device 500 determines charging green power energy smaller than the green power energy specified by the user. The first information 171 indicates the charging green power energy determined by the computing device 500 (electric energy smaller than the green power energy specified by the user).
(4) In FIG. 10, description has been given of the configuration in which the EVSE 40 charges the vehicle 50 with the total energy transmitted in Step S14. However, the charging may end during the charging in Step S16. This case occurs, for example, due to a failure in a charging device (for example, the connector 43).

In preparation for such a case, the computing device 500 may hold fifth information indicating the breakdown of the charging power (ratio of green power and ratio of normal power). When the charging ends during the charging in Step S 16, the computing device 500 calculates green power and normal power that have actually been used for the charging based on the actually charged power and the fifth information. The calculated green power and normal power serve as the first information 171. The computing device 500 updates the accumulated information 170 based on the first information 171.

In FIG. 11, description has been given of the configuration in which the total energy transmitted in Step S54 is discharged from the vehicle 50 to the EVSE 40. However, the discharging may end during the discharging in Step S56. This case occurs, for example, due to a failure in a discharging device (for example, the connector 43).

In preparation for such a case, the computing device 500 may hold sixth information indicating the breakdown of the discharged power (ratio of green power and ratio of normal power). When the discharging ends during the discharging in Step S56, the computing device 500 calculates green power and normal power that have actually been discharged based on the actually discharged power and the sixth information. The calculated green power and normal power serve as the second information 172. The computing device 500 updates the accumulated information 170 based on the second information 172.

(5) In the present embodiment, description has been given of the configuration in which the ratio D3 (%) of the green power and the ratio E3 (%) of the normal power in the third information 173 are fixed values. However, the ratio D3 (%) of the green power and the ratio E3 (%) of the normal power may be values specified by the user.

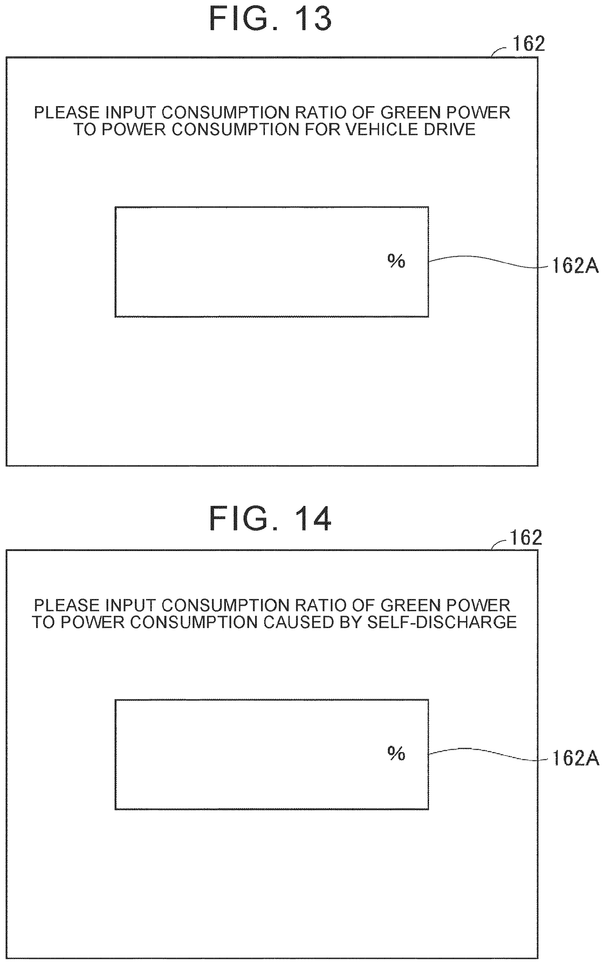

FIG. 13 is a diagram showing an example of an input screen for the user to specify the ratio D3. The screen of FIG. 13 is displayed by a predetermined operation on the input device 161 by the user. The input screen of FIG. 13 is displayed in a display area of the display 162. In the example of FIG. 13, a message "Please input consumption ratio of green power to power consumption for vehicle drive." and an input area 162A are displayed. The user uses the input device 161 to input a desired ratio D3 (%) in the input area 162A. The vehicle 50 transmits the input ratio D3 (%) to the management server 2. The computing device 500 of the management server 2 updates the ratio D3 (%) in the stored third information 173 to the ratio D3 (%) from the vehicle 50. The ratio E3 (%) of the normal power is calculated by "100% - ratio D3 (%) input by user". According to such a configuration, the computing device 500 can update the accumulated information 170 based on the third information 173 reflecting the ratio D3 (%) of the green power specified by the user.

(6) In the present embodiment, description has been given of the configuration in which, regarding the breakdown (ratio) of the power consumption when the fourth condition is satisfied, the ratio of the green power is 0% and the ratio of the normal power is 100%. However, the ratio of the green power to the power consumption when the fourth condition is satisfied may be another value. For example, when the fourth condition is satisfied, the update unit 504 of the computing device 500 uses the fourth information 174 indicated by the dashed line in FIG. 4. The fourth information 174 is used to calculate the green power consumed from the stop of the drive of the vehicle 50 to the start of the drive of the vehicle 50. The fourth information 174 of this modification indicates a ratio D4 (%) of the green power and a ratio E4 (%) of the normal power. It is noted that D4 + E4 = 100 (%).

In such a case, the power consumption is N (kWh) (see FIG. 8). Therefore, the update unit 504 determines, based on the breakdown of the fourth information 174, that the power consumption of the green power is "N × (D4) / 100" (kWh) and the power consumption of the normal power is "N × (E4) / 100" (kWh).

That is, the update unit 504 updates the green power energy in the accumulated information 170 from "A (kWh)" to "A - {N × (D4) / 100} (kWh)". The update unit 504 also updates the normal power energy in the accumulated information 170 from "B (kWh)" to "B - {N × (E4) / 100} (kWh)". According to such a configuration, the computing device 500 can update the accumulated information based on the energy consumption from the stop of the drive of the vehicle 50 to the start of the drive of the vehicle 50.

The ratio D4 (%) of the green power and the ratio E4 (%) of the normal power may be fixed values. The ratio D4 (%) of the green power and the ratio E4 (%) of the normal power may be values specified by the user.

FIG. 14 is a diagram showing an example of an input screen for specifying the ratio D4. The screen of FIG. 14 is displayed by a predetermined operation on the input device 161 by the user. The input screen of FIG. 14 is displayed in the display area of the display 162. In the example of FIG. 14, a message "Please input consumption ratio of green power to power consumption caused by self-discharge." and an input area 162A are displayed. The user uses the input device 161 to input a desired ratio D4 (%) in the input area 162A. The vehicle 50 transmits the input ratio D4 (%) to the management server 2. The computing device 500 of the management server 2 updates the ratio D4 (%) in the stored fourth information 174 to the ratio D4 (%) from the vehicle 50. The ratio E4 (%) of the normal power is calculated by "100% - ratio D4 (%) input by user". According to such a configuration, the computing device 500 can update the accumulated information 170 based on the fourth information 174 reflecting the ratio D4 (%) of the green power specified by the user.

The embodiment disclosed herein should be considered to be illustrative and not restrictive in all respects. The scope of the present disclosure is shown by the claims rather than by the above description of the embodiment, and includes all modifications within the scope equivalent to the claims.

## Claims

1. A computing device (500) for a battery (130) mounted on a vehicle (50) and configured to store electric power including first power obtained from renewable energy and second power different from the first power, the computing device (500) comprising:
a memory (252) configured to store accumulated information (170) including an index value of electric energy of the first power stored in the battery (130); and
a controller (251) configured to control the memory (252),
wherein the controller (251) is configured to:
when the battery (130) is charged by a power device (40) provided outside the vehicle (50), update the accumulated information (170) based on first information (171) related to the first power used for charging; and
when the electric power in the battery (130) is discharged to the power device (40), update the accumulated information (170) based on second information (172) related to the first power used for discharging.

2. The computing device (500) according to claim 1, wherein:
the computing device (500) is configured to acquire the first information (171) generated based on specification by a user; and
the controller (251) is configured to update the accumulated information (170) based on the acquired first information (171).

3. The computing device (500) according to claim 1 or 2, wherein:
the computing device (500) is configured to acquire the second information (172) generated based on specification by a user; and
the controller (251) is configured to update the accumulated information (170) based on the acquired second information (172).

4. The computing device (500) according to claim 1 or 2, wherein:
the memory (252) is configured to store third information (173) to be used to calculate the first power consumed from a start of drive of the vehicle (50) to a stop of the drive of the vehicle (50); and
the controller (251) is configured to update the accumulated information (170) based on the third information (173) when the drive of the vehicle (50) is stopped.

5. The computing device (500) according to claim 4, wherein:
the third information (173) includes a ratio of the consumed first power to power consumption from the start of the drive of the vehicle (50) to the stop of the drive of the vehicle (50); and
the ratio of the first power in the third information (173) is specified by a user.

6. The computing device (500) according to claim 1 or 2, wherein:
the memory (252) is configured to store fourth information (174) to be used to calculate the first power consumed from a stop of drive of the vehicle (50) to a start of the drive of the vehicle (50); and
the controller (251) is configured to update the accumulated information (170) based on the fourth information (174) when the drive of the vehicle (50) is started.

7. The computing device (500) according to claim 6, wherein:
the fourth information (174) includes a ratio of the consumed first power to power consumption from the stop of the drive of the vehicle (50) to the start of the drive of the vehicle (50); and
the ratio of the first power in the fourth information (174) is specified by a user.

8. The computing device (500) according to claim 6, wherein:
the fourth information (174) includes a ratio of the consumed first power to power consumption from the stop of the drive of the vehicle (50) to the start of the drive of the vehicle (50); and
the ratio of the first power in the fourth information (174) is 0%.

9. The computing device (500) according to claim 1 or 2, wherein the computing device (500) is configured to notify a user of the vehicle (50) about the updated accumulated information (170).

10. The vehicle (50) comprising the computing device (500) according to claim 1 or 2.

11. A management server (2) configured to manage the vehicle (50), the management server (2) comprising the computing device (500) according to claim 1 or 2,
wherein the memory (252) is configured to store the accumulated information (170) of the vehicle (50) for each vehicle identification information (178) of the vehicle (50).

12. A computing method for a battery (130) mounted on a vehicle (50) and configured to store electric power including first power obtained from renewable energy and second power different from the first power, the computing method comprising:
when the battery (130) is charged by a power device (40) provided outside the vehicle (50), updating accumulated information (170) including an index value of electric energy of the first power stored in the battery (130); and
when the electric power in the battery (130) is discharged to the power device (40), updating the accumulated information (170) based on second information (172) related to the first power used for discharging.
